# EUROPÄISCHE PATENTANMELDUNG

(11) **EP 0 642 820 A1**
(43) Veröffentlichungstag der Anmeldung: **15.03.1995**
(21) Anmeldenummer: 94112588.2
(22) Anmeldetag: 11.08.1994
(51) Int. Cl.: B01D 53/34, B01J 20/04, B01D 53/08, C04B 7/36

(54) **Verfahren zur Reinigung von Rauchgasen**

(30) Priorität: 09.09.1993 DE 4330593
(71) Anmelder: KRUPP POLYSIUS AG, D-59267 Beckum (DE)
(72) Erfinder: Kupper, Detlev, Dr. Ing., D-48291 Telgte (DE); Schmidt, Michael, Dr. rer. nat., 59329 Wadersloh (DE)
(74) Vertreter: Tetzner, Volkmar, Dr.-Ing. Dr. jur.

(57) **Zusammenfassung**

Die Erfindung betrifft ein Verfahren zur Reinigung von Rauchgasen, die zwecks Entschwefelung und Entfernung von Schwermetallen und NH₃ bzw. NHₓ mit einem Sorbens in Berührung gebracht werden. Im Hinblick auf eine gute Verfügbarkeit sowie eine wirtschaftliche Ausnutzung wird als Sorbens ein bei Temperaturen von über 1.200 °C gebranntes Material mit zementklinkerartigen Eigenschaften eingesetzt.

## Beschreibung

Die Erfindung betrifft ein Verfahren zur Reinigung von Rauchgasen, indem die Rauchgase zwecks Entschwefelung sowie zwecks Entfernung von Schwermetallen und NH₃ bzw. NHₓ mit einem Sorbens in Berührung gebracht werden.

Verfahren dieser Art werden vor allem zur Reinigung von Rauchgasen aus Großfeuerungen bzw. Industrieofenanlagen verwendet und sind aus der Praxis in verschiedenen Ausführungsformen bekannt. Als Sorbens (Sorptionsmittel) zur Entfernung von Schadstoffen aus den Rauchgasen werden bisher vor allem kohlehaltige Adsorptionsmittel wie z. B. Koks, Aktivkohle, Aktivkoks eingesetzt.

Der Erfindung liegt die Aufgabe zugrunde, ein Verfahren der im Oberbegriff des Anspruches 1 vorausgesetzten Art vorzuschlagen, das sich durch eine gute Verfügbarkeit und relativ wirtschaftliche Ausnutzung des Sorbens (Sorptionsmittel) auszeichnet.

Diese Aufgabe wird erfindungsgemäß durch das Kennzeichen des Anspruches 1 gelöst.

Vorteilhafte Ausgestaltungen und Weiterbildungen der Erfindung sind Gegenstand der Unteransprüche.

Bei diesem erfindungsgemäßen Verfahren zur Reinigung von Rauchgasen wird als Sorbens für die in den Rauchgasen enthaltenen Schadstoffe ein Material mit zementklinkerartigen Eigenschaften eingesetzt, das bei Temperaturen von über 1.200 °C gebrannt wird.

Bei Versuchen, die unter dem Gesichtspunkt dieser Erfindung durchgeführt worden sind, konnte bestätigt werden, daß durch ein Inberührungbringen der mit den Schadstoffen beladenen Rauchgase mit diesem erfindungsgemäß hergestellten und eingesetzten Sorbens eine sehr wirkungsvolle Entschwefelung sowie eine sehr weitgehende Entfernung von Schwermetallen bzw. Schwermetallanteilen und von Ammoniak bzw. Ammoniakverbindungen (NH₃ bzw. NHₓ) erreicht werden kann. Als Sorbens kann grundsätzlich jedes Material mit zementklinkerartigen Eigenschaften eingesetzt werden, das bei Brenntemperaturen von > 1.200 °C gebrannt bzw. wärmebehandelt worden ist. Bevorzugt wird hierfür vor allem Zementklinkermaterial bzw. Zementklinker, bei dem es sich um relativ poröses gesintertes Material handelt, das bereits über die Calcinationstemperaturen hinaus wärmebehandelt worden ist. Gerade wenn es sich bei dem Sorbens um solchen Zementklinker handelt, dann ist eine relativ gute Verfügbarkeit durch Zementfabriken gewährleistet, und darüber hinaus kann dieses mit Schadstoffen beladene Sorbens, also mit den aus den Rauchgasen entfernten Schadstoffen beladener Zementklinker mit anderem, in einer Zementfabrik direkt zu verarbeitendem Zementklinker zu Zement vermahlen werden, wobei bei einer solchen Herstellung von Zement der üblicherweise bei der Zementmahlung einzubringende Gipsanteil entsprechend verringert oder eventuell sogar eingespart werden kann.

Bei der Entschwefelung von Rauchgasen erfolgt eine Absorption, wobei sich in dem Sorbens bzw. Sorptionsmittel durch die Absorption neue Verbindungen, insbesondere Gips, bilden. Bei der Entfernung von Schwermetallen und NH₃ bzw. NHₓ erfolgt eine Adsorption und/oder Absorption durch die Berührung mit dem Sorbens.

Das als Sorbens zu verwendende Material, insbesondere Zementklinker kann im allgemeinen in ungemahlenem Zustand bzw. als ungemahlenes Produkt eingesetzt werden.

Es wird als besonders vorteilhaft angesehen, wenn das Sorbens mit einer vorbestimmten Porenradienverteilung eingesetzt wird, d. h. mit einer vorbestimmten Größe und Menge bzw. Oberfläche der Poren im zementklinkerartigen Material, wobei eine relativ große Porenradienverteilung für eine verhältnismäßig große Sorptionsfähigkeit des Sorbens sorgt. Die Porenradienverteilung kann beim Brennen des Materiales durch die Brenntemperatur, die Verweilzeit und/oder durch den Zusatz von Mineralisatoren eingestellt werden.

Weiterhin kann es von Vorteil sein, wenn das Sorbens mit einem vorbestimmten Freikalkgehalt eingesetzt wird, vorzugsweise mit einem normgerechten Freikalkgehalt, wobei dieser Freikalkgehalt ebenfalls beim Brennen des Materiales durch die Brenntemperatur, die Verweilzeit und/oder durch den Zusatz von Mineralisatoren eingestellt werden kann.

Bei diesem erfindungsgemäßen Verfahren besteht auch die Möglichkeit, daß das als Sorbens eingesetzte Material sowohl eine vorbestimmte Porenradienverteilung als auch einen vorbestimmten Freikalkgehalt aufweist, wobei Porenradienverteilung und Freikalkgehalt sinnvoll miteinander verknüpft werden können.

Wie bereits weiter oben erwähnt worden ist, kann das als Sorbens verwendete zementklinkerartige Material im wesentlichen in ungemahlenem Zustand eingesetzt werden. In jedem Falle sollte dieses Material jedoch eine Körnung von > 1 mm aufweisen, und zwar vor allem dann, wenn - wie später noch erläutert - das Sorbens als Schicht verwendet und von den zu reinigenden Rauchgasen durchströmt wird.

Bei diesem erfindungsgemäßen Reinigungsverfahren kann es vielfach von Vorteil sein, in den Rauchgasen durch Zugabe von Wasser einen vorbestimmten Feuchtigkeitsgehalt einzustellen, bevor die Rauchgase mit dem Sorbens in Berührung gebracht werden. Hierbei sollte der Feuchtigkeitsgehalt in den Rauchgasen nur bis unterhalb des Taupunktes erhöht werden.

Es wird als besonders vorteilhaft angesehen, wenn die mit Schadstoffen beladenen Rauchgase bei einer vorbestimmten Temperatur, vorzugsweise 1 bis 10 °C oberhalb des Taupunktes bei einer voreingestellten Rauchgastemperatur, mit dem Sorbens in Berührung gebracht werden.

Es ist weiterhin besonders vorteilhaft, wenn für die Verwendung als Sorbens ein sogenannter Schwachbrand-Zementklinker hergestellt wird. Dieser Schwachbrand-Zementklinker hat für diese vorgesehene Rauchgasreinigung günstige Sorptionseigenschaften, und er kann dabei verhältnismäßig energiesparend hergestellt werden. Bei dieser Herstellung von Schwachbrand-Zementklinker kann es für die Verwendung als Sorbens ferner zweckmäßig sein, wenigstens ein Zusatzmittel zuzugeben, wobei es sich bei solchen Zusatzmitteln um Mineralisatoren, SO₃-Träger, Bypass-Staub (aus der Zementherstellungsanlage) handeln kann.

Als Mineralisatoren, die bei der Herstellung des als Sorbens einzusetzenden Materiales zugesetzt werden, können fluoridhaltige, zinkhaltige, titanhaltige oder ähnliche Materialien verwendet werden. Als SO₃-Träger, die als Zusatzmittel bei der Herstellung der zementhaltigen Materialien verwendet werden, können Materialien Verwendung finden, die aus reinen Rauchgasentschwefelungsanlagen, aus Kraftwerken, aber auch aus dem eigenen Kreislauf dieses erfindungsgemäßen Verfahrens stammen können.

Wie bereits weiter oben ebenfalls angedeutet worden ist, wird eine besonders vorteilhafte Anwendung dieses erfindungsgemäßen Verfahrens in Zementfabriken, d. h. bei der Herstellung von Zement gesehen. In diesem Sinne wird es zweckmäßig sein, wenn das Sorbens für die Rauchgasreinigung in demselben Werk, in dem es wenigstens teilweise eingesetzt wird, auch hergestellt wird. Man kann dabei sogar so weit gehen, daß das Sorbens in derselben Produktionslinie, in der es wenigstens teilweise eingesetzt wird, auch hergestellt wird. Dies bedeutet somit, daß beispielsweise die Abgase bzw. Rauchgase einer Brennofenanlage zur Herstellung von Zement mit Zementklinker gereinigt werden können, der teilweise oder weitgehend aus derselben Brennofenanlage stammt, wobei dieser Zementklinker zuvor eventuell noch unter Zugabe der weiter oben erwähnten Zusatzmittel aufbereitet werden kann, beispielsweise durch Zumischen bzw. Zudosieren dieser Zusatzmittel in den erforderlichen Mengen bzw. Anteilen. Mit Schadstoffen (SO₂, SOₓ, Schwermetallen bzw. Schwermetallanteilen, NH₃ bzw. NHₓ) beladenes Sorbens/Zementklinker braucht in diesem Falle nicht - wie es vielfach bei kohlehaltigen Adsorptionsmitteln der Fall ist - in entsprechend aufwendigen Anlagen desorbiert zu werden, sondern kann - wie weiter oben erwähnt - zu Zement vermahlen und in üblicher Weise gemischt werden.

Bei der praktischen Durchführung dieses erfindungsgemäßen Rauchgasreinigungsverfahrens kann jedes geeignete und sinnvolle Inberührungbringen von beladenen Rauchgasen und Adsorbens zur Anwendung kommen, wobei dies auch an beliebigen und geeigneten Stellen geschehen kann. Als besonders bevorzugt werden folgende praktische Ausführungsmöglichkeiten angesehen:
- Das Sorbens, also der entsprechend hergestellte Zementklinker wird in Form eines sich im wesentlichen vertikal bewegenden Wanderbettes von den mit Schadstoffen beladenen Rauchgasen durchströmt, wobei das Wanderbett beispielsweise als Schüttschichtfilter ausgeführt und von den mit Schadstoffen beladenen Rauchgasen im Querstrom oder im Gegenstrom durchströmt werden kann.
- Ferner kann dieses erfindungsgemäß eingesetzte Sorbens in Form eines sich im wesentlichen horizontal bewegenden Wanderbettes von den schadstoffbeladenen Rauchgasen durchströmt werden, wobei dieses Wanderbett von den Rauchgasen quer durchströmt wird und beispielsweise in Form eines sogenannten "Lepolrostes" ausgeführt sein kann.
- Eine weitere Möglichkeit besteht darin, mit Hilfe des erfindungsgemäß verwendeten Sorbens ein fluidisiertes Bett, insbesondere eine stationäre, eine expandierende oder eine zirkulierende Wirbelschicht auszubilden, wobei dieses fluidisierte Bett von den mit Schadstoffen beladenen und zu reinigenden Rauchgasen durchströmt wird.

Anhand einer beigefügten Graphik seien noch zwei praktische Arbeitsbeispiele für die Anwendung des erfindungsgemäßen Verfahrens erläutert. In dieser Graphik ist für beide Arbeitsbeispiele jeweils das Verhältnis der SO₂-Konzentration in einem zu reinigenden Rauchgas vor (C_{E}) und nach (C_{A}) Durchströmen des erfindungsgemäß hergestellten und verwendeten Sorbens in Abhängigkeit von der Sorptionszeit (Behandlungszeit) dargestellt, und zwar ist in der Abszisse jeweils die Sorptionszeit in Stunden (h) angegeben, während in der Ordinate das Konzentrationsverhältnis des SO₂ (C_{A} : C_{E}) abgetragen ist.

Bei beiden Arbeitsbeispielen der Kurven I und II wurden gleichartige Abgase gereinigt, und zwar mit Schadstoffen beladene Abgase einer Drehrohrofenanlage zur Herstellung von Zement, wobei diese Reinigung erfolgte, nachdem die Abgase eine zugehörige Elektrofilteranlage passiert hatten. In beiden Arbeitsbeispielen wurde als Sorbens ein bei Temperaturen von über 1.200 °C gebranntes Material mit zementklinkerartigen Eigenschaften eingesetzt, das nachfolgend als Spezialklinker bezeichnet wird und zumindest eine vorbestimmte Porenradienverteilung sowie eine bevorzugte Körnung von größer als 1 mm aufwies.

Bei beiden Arbeitsbeispielen betrug die Anfangskonzentration an SO₂ in den Abgasen, also der Wert C_{E}, 1.500 mg/Nm³, wobei die Abgase mit dieser Anfangskonzentration an SO₂ mit einer Strömungsgeschwindigkeit von 0,13 m/s durch das Sorbens hindurchgeleitet und dabei mit diesem Sorbens in Berührung gebracht wurden; die Feuchtigkeit der Abgase betrug jeweils etwa 25 Vol.-%.

Die beiden Arbeitsbeispiele I und II unterscheiden sich dadurch voneinander, daß die Reinigung bzw. die Sorption der Abgase gemäß Beispiel I bei einer Temperatur von T = 73 °C und beim Beispiel II bei einer Temperatur T = 70 °C durchgeführt wurde, wobei die Taupunkttemperatur jeweils bei 63 °C lag.

Die Fähigkeit des Sorbens, das in den Abgasen enthaltene SO₂ zu entfernen, läßt sich aus den beiden Arbeitsbeispielen I und II in der Graphik ablesen. Danach wird das SO₂ in beiden Arbeitsbeispielen über eine Dauer von 9 h vollständig, d.h. zu 100 %, aus den Abgasen entfernt.

Im Beispiel I nimmt dann die Fähigkeit des Sorbens, das SO₂ aufzunehmen, deutlich ab, was am Ansteigen des Verhältnisses von C_{A} : C_{E} auf 0,7 nach etwa 15 h Sorptionszeit zu erkennen ist.

Im Beispiel II wird bis zu einer Sorptionszeit von 31 h das SO₂ vollständig aus den Abgasen entfernt und danach steigt die SO₂-Konzentration in den Abgasen nach dem Hindurchströmen durch das Sorbens langsam, aber stetig bis auf ein Verhaltnis von C_{A} : C_{E} von etwa 0,3 an.

Es läßt sich somit erkennen, daß das Verhältnis der SO₂-Konzentration im Rauchgas bzw. Abgas nach der Behandlung mit dem Sorbens im Vergleich zu der Anfangskonzentration als eine Funktion der Zeit (Kontaktzeit zwischen Rauchgas und Sorbens) sowie in Abhängigkeit von der Sorptions- bzw. Behandlungstemperatur gesehen werden kann.

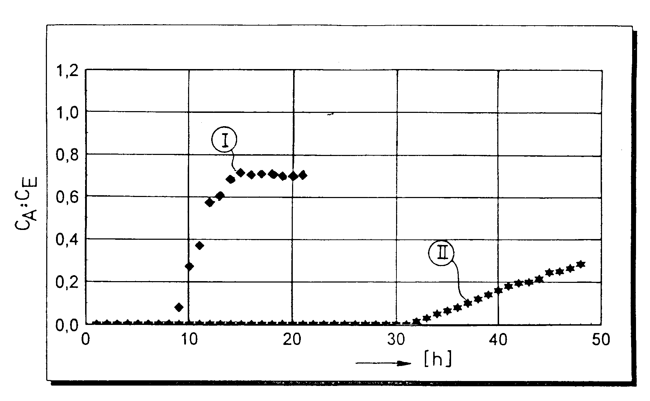

## Patentansprüche

1. Verfahren zur Reinigung von Rauchgasen, indem die Rauchgase zwecks Entschwefelung sowie zwecks Entfernung von Schwermetallen und NH₃ bzw. NHₓ mit einem Sorbens in Berührung gebracht werden,
dadurch gekennzeichnet,
daß als Sorbens ein bei Temperaturen von über 1.200 °C gebranntes Material mit zementklinkerartigen Eigenschaften eingesetzt wird.

2. Verfahren nach Anspruch 1, dadurch gekennzeichnet, daß das Sorbens mit einer vorbestimmten Porenradienverteilung eingesetzt wird, die beim Brennen durch die Brenntemperatur, die Verweilzeit und/oder durch den Zusatz von Mineralisatoren eingestellt wird.

3. Verfahren nach Anspruch 1, dadurch gekennzeichnet, daß das Sorbens mit einem vorbestimmten Freikalkgehalt eingesetzt wird, der beim Brennen durch die Brenntemperatur, die Verweilzeit und/oder durch Zugabe von Mineralisatoren eingestellt wird.

4. Verfahren nach Anspruch 1, dadurch gekennzeichnet, daß das als Sorbens eingesetzte Material sowohl einen vorbestimmten Freikalkgehalt als auch eine vorbestimmte Porenradienverteilung aufweist, wobei Porenradienverteilung und Freikalkgehalt miteinander verknüpft werden.

5. Verfahren nach Anspruch 1, dadurch gekennzeichnet, daß das Sorbens mit einer Körnung von > 1 mm eingesetzt wird.

6. Verfahren nach Anspruch 1, dadurch gekennzeichnet, daß in den Rauchgasen durch Zugabe von Wasser ein vorbestimmter Feuchtigkeitsgehalt eingestellt wird, bevor die Rauchgase mit dem Sorbens in Berührung gebracht werden, wobei der Feuchtigkeitsgehalt nur bis unterhalb des Taupunktes erhöht wird.

7. Verfahren nach Anspruch 6, dadurch gekennzeichnet, daß die mit Schadstoffen beladenen Rauchgase mit einer vorbestimmten Temperatur, vorzugsweise 1 bis 10 °C oberhalb des Taupunktes bei einer vorbestimmten Rauchgastemperatur, mit dem Sorbens in Berührung gebracht werden.

8. Verfahren nach Anspruch 1, dadurch gekennzeichnet, daß für die Verwendung des Sorbens ein Schwachbrand-Zementklinker hergestellt wird.

9. Verfahren nach Anspruch 8, dadurch gekennzeichnet, daß der Schwachbrand-Zementklinker unter Zugabe wenigstens eines Zusatzmittels wie Mineralisatoren, SO₃-Träger und Bypass-Staub hergestellt wird.

10. Verfahren nach Anspruch 1, dadurch gekennzeichnet, daß das Sorbens in demselben Werk, in dem es wenigstens teilweise eingesetzt wird, auch hergestellt wird.

11. Verfahren nach Anspruch 10, dadurch gekennzeichnet, daß das Sorbens in derselben Produktionslinie, in der es wenigstens teilweise eingesetzt wird, hergestellt wird.

12. Verfahren nach Anspruch 1, dadurch gekennzeichnet, daß das Sorbens in Form eines sich im wesentlichen vertikal bewegenden Wanderbettes von den mit Schadstoffen beladenen Rauchgasen durchströmt wird.

13. Verfahren nach Anspruch 1, dadurch gekennzeichnet, daß das Sorbens in Form eines sich im wesentlichen horizontal bewegenden Wanderbettes von den mit Schadstoffen beladenen Rauchgasen durchströmt wird.

14. Verfahren nach Anspruch 1, dadurch gekennzeichnet, daß mit Hilfe des Sorbens ein fluidisiertes Bett, insbesondere eine stationäre, expandierende oder zirkulierende Wirbelschicht ausgebildet wird, das von den mit Schadstoffen beladenen Rauchgasen durchströmt wird.
